# EUROPÄISCHE PATENTANMELDUNG

(11) **EP 4 296 878 A1**
(43) Veröffentlichungstag der Anmeldung: **27.12.2023**
(21) Anmeldenummer: 23163080.7
(22) Anmeldetag: 21.03.2023
(51) Int. Cl.: G06F 30/13, F24S 25/61

(54) **COMPUTERIMPLEMENTIERTES VERFAHREN ZUM ERSTELLEN EINES LASTVERTEILUNGSPLANS**

(30) Priorität: 20.06.2022 DE 102022115319
(71) Anmelder: SL Rack GmbH, 83527 Haag (DE)
(72) Erfinder: Schletter, Ludwig, 83527 Haag i. OB (DE); Achatz, Florian, 94259 Kirchberg i.W. (DE)
(74) Vertreter: Lichtnecker, Markus Christoph

(57) **Zusammenfassung**

Computerimplementiertes Verfahren zum Erstellen eines Lastverteilungsplans zur Befestigung wenigstens eines Solarpanels (16) und/oder eines Photovoltaikmoduls auf einem realen Dach, bei dem ein Modell mit einem Dach, vorzugsweise Dachsparren (10), Halteschienen (12) und Dachhaken (14) erstellt wird, und wenigstens ein Dachhaken (14) manuell verschoben wird, um zur Materialeinsparung eine gewünschte Belastung (W1') einzustellen, wobei die Belastung des Dachhakens (14) und/oder der Halteschiene (12) in Abhängigkeit von der Position des Dachhakens (14) in Echtzeit berechnet und/oder angezeigt wird.

## Beschreibung

Die Erfindung betrifft ein computerimplementiertes Verfahren zum Erstellen eines Lastverteilungsplans zur Befestigung wenigstens eines Solarpanels und/oder eines Photovoltaikmoduls auf einem realen Dach, bei dem ein Modell mit einem Dach, vorzugsweise Dachsparren, Halteschienen und Dachhaken, z.B. Schwerlasthaken, erstellt wird.

Das Erstellen eines Lastverteilungsplans mittels eines computerimplementierten Verfahrens ist grundsätzlich bekannt.

Dabei kann die Belastung des Dachhakens und/oder der Halteschiene angezeigt werden.

So weiß ein Benutzer, an welchen Positionen welche Belastungen herrschen.

Bisher werden die Dachhaken oberhalb der Dachsparren angeordnet. Die Positionen sind daher durch die Dachsparren festgelegt und können nicht verändert werden. Dies führt dazu, dass die Traglast der Halteschienen und Dachhaken nur unzureichend ausgenutzt wird und zu viel Material verbaut wird.

Es ist daher eine Aufgabe der Erfindung, ein computerimplementiertes Verfahren zum Erstellen eines Lastverteilungsplans zur Befestigung wenigstens eines Solarpanels und/oder eines Photovoltaikmoduls auf einem realen Dach zu schaffen, wodurch Material eingespart und somit Kosten reduziert werden.

Die Lösung dieser Aufgabe erfolgt durch die Gegenstände/Verfahren der unabhängigen Ansprüche.

Erfindungsgemäß ist das computerimplementierte Verfahren zum Erstellen eines Lastverteilungsplans zur Befestigung wenigstens eines Solarpanels und/oder eines Photovoltaikmoduls auf einem realen Dach ausgebildet und/oder kann hierzu verwendet werden.

Es wird ein, vorzugsweise digitales, Modell mit einem Dach, Halteschienen und Dachhaken erstellt.

Vorzugsweise weist das Modell Dachsparren auf.

Es war überraschend, dass die Dachhaken nicht zwingend unmittelbar oberhalb der Dachsparren angeordnet werden müssen. So wurde herausgefunden, dass die Dachhaken auch abseits der Dachsparren befestigt werden können, wobei dennoch ein ausreichender Halt gewährleistet wird bzw. die erforderlichen Belastungsgrenzen, z.B. in Bezug auf Wind- und/oder Schneelasten, eingehalten werden.

Wenigstens oder genau ein Dachhaken wird manuell, vorzugsweise entlang einer Halteschiene, verschoben, um zur Materialeinsparung eine gewünschte Belastung einzustellen.

Beispielsweise kann der Dachhaken an eine Position zwischen zwei Dachsparren verschoben werden.

Dies wird beispielsweise durch eine variable Dachanbindung mit langen Halteschienen ermöglicht.

Zwar kann die Belastung am Dachhaken bzw. an der Halteschiene steigen, jedoch können die erforderlichen Belastungsgrenzen dennoch eingehalten werden.

Durch die variable Anordnung der Dachhaken kann Material, z.B. Dachhaken und/oder Halteschienen, eingespart werden.

Die Belastung des Dachhakens und/oder der Halteschiene wird in Abhängigkeit von der Position des Dachhakens in Echtzeit berechnet und/oder angezeigt.

Das computerimplementierte Verfahren liefert somit Echtzeit-Ergebnisse und läuft daher schneller als herkömmliche Programme. Zudem werden die früheren Belastungswerte vorzugsweise überschrieben und durch die aktuellen Belastungswerte ersetzt, wodurch der Bedarf an Speicherplatz reduziert wird. Schließlich wird durch die Echtzeit-Daten die Qualität des Modells verbessert.

Weiterbildungen der Erfindung sind auch den abhängigen Ansprüchen, der Beschreibung sowie den beigefügten Zeichnungen zu entnehmen.

Gemäß einer Ausführungsform wird die Belastung in Prozenten angezeigt.

Der Benutzer sieht daher stets, an welcher Position des Dachhakens welche Belastung herrscht.

Durch die Angabe in Prozenten ist es dem Benutzer möglich, die Belastung exakt und/oder innerhalb vorgegebener Belastungsgrenzen einzustellen.

Nach einer weiteren Ausführungsform wird die Belastung abhängig vom Grad der Belastung in unterschiedlichen Farben angezeigt.

Dem Benutzer wird somit optisch verdeutlicht, an welcher Position des Dachhakens welche Belastung herrscht.

Beispielsweise kann bei niedriger Belastung, z.B. unter 50 % der Maximalbelastung, eine grüne oder blaue Farbe gewählt werden. Bei einer höheren Belastung kann z.B. eine gelbe, orange oder rote Farbe gewählt werden.

Gemäß einer weiteren Ausführungsform werden die Belastungen sämtlicher Dachhaken und/oder der Halteschienen angezeigt.

Dies ist sinnvoll, zumal sich das Verschieben lediglich eines Dachhakens auch auf die anderen Bauteile auswirken kann.

Ferner erhält der Benutzer stets ein Gesamtbild der Belastungen.

Nach einer weiteren Ausführungsform werden im Programm mehrere Dachhaken gemeinsam verschoben.

Beispielsweise können zwei, drei, vier, fünf oder mehr Dachhaken gemeinsam verschoben werden. Dadurch kann Zeit eingespart werden.

Dies bietet sich beispielsweise bei großen, homogen aufgebauten Dachflächen an.

Gemäß einer weiteren Ausführungsform erfolgt das Verschieben im Programm mittels Drag-and-drop.

Der Benutzer kann beispielsweise einen Dachhaken anklicken, diesen an die gewünschte Stelle verschieben und loslassen. Der Dachhaken verbleibt nun an der gewünschten Stelle.

Die Belastung des Dachhakens und/oder der Halteschiene wird vorzugsweise auch während des Verschiebens in Echtzeit berechnet und/oder angezeigt.

Die Erfindung betrifft auch ein System zur Datenverarbeitung, umfassend Mittel zur Ausführung des erfindungsgemäßen Verfahrens.

Ferner betrifft die Erfindung ein Computerprogrammprodukt, umfassend Befehle, die bei der Ausführung des Programms durch einen Computer diesen veranlassen, das erfindungsgemäße Verfahren auszuführen.

Schließlich betrifft die Erfindung ein computerlesbares Speichermedium, umfassend Befehle, die bei der Ausführung durch einen Computer diesen veranlassen, das erfindungsgemäße Verfahren auszuführen.

Alle hier beschriebenen Ausführungsformen und Bauteile der Vorrichtungen sind vorzugsweise dazu ausgebildet, nach einem oder mehreren der hier beschriebenen Verfahren betrieben zu werden. Ferner können alle hier beschriebenen Ausführungsformen der Vorrichtungen sowie alle hier beschriebenen Ausführungsformen der Verfahren jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Ausführungsform eines digitalen Modells gemäß dem Stand der Technik, und
- Fig. 2: eine Ausführungsform eines digitalen Modells gemäß dem erfindungsgemäßen Verfahren.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

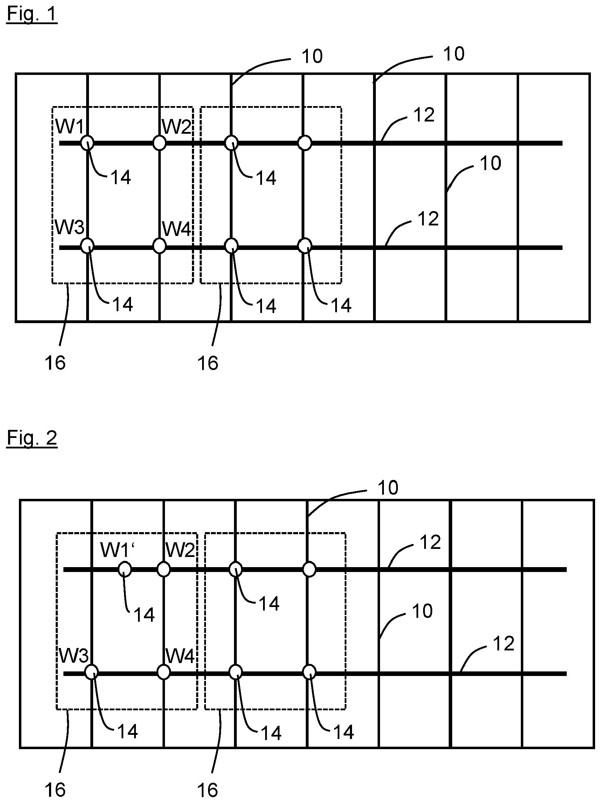

Fig. 1 zeigt ein herkömmliches digitales Modell, das beispielsweise auf einem Bildschirm dargestellt wird.

Das Modell weist Dachsparren 10, Halteschienen 12 und Dachhaken 14 auf. Optional können Solarpanele 16 und/oder Photovoltaikmodule dargestellt sein.

Die Dachhaken 14 sind oberhalb der Dachsparren 10 angeordnet.

Die Belastung W1, W2, W3, W4 der Dachhaken 14 kann hierbei z.B. in Prozent angezeigt werden.

Rein beispielhaft kann W1 = 44 %, W2 = 28 %, W3 = 42 % und W4 = 35 % sein.

Zudem können die Belastungen der Halteschienen 12 angezeigt werden.

Wie in Fig. 2 dargestellt ist, kann ausgehend vom Modell gemäß Fig. 1 ein Dachhaken 14 manuell, z.B. mittels Drag-and-drop, verschoben werden.

Ein Benutzer kann den Dachhaken 14, vorzugsweise entlang einer Halteschiene 12, verschieben. Dabei ändert sich der Wert der Belastung.

Auf diese Weise kann die gewünschte Belastung eingestellt und somit Material eingespart werden.

Die Belastung der Dachhaken 14 und/oder der Halteschienen 12 kann dabei in Abhängigkeit von der Position des Dachhakens 14 in Echtzeit berechnet und angezeigt werden.

Beispielsweise kann der Benutzer den Dachhaken 14 an eine Position verschieben, an der die Belastung 75 % beträgt.

So kann sich der Wert von W1 beispielsweise zum Wert W1'= 75 % ändern.

Der Dachhaken 14 wird nun mit 75 % der Maximalbelastung belastet.

Die Belastung kann vorzugsweise stets in der Nähe des Dachhakens 14 angezeigt werden. So kann sich die Position der Belastungswerte ändern. Dies erleichtert dem Benutzer die Zuordnung.

### Bezugszeichenliste

- 10: Dachsparren
- 12: Halteschiene
- 14: Dachhaken
- 16: Solarpanel

- W1: Belastung
- W1': Belastung
- W2: Belastung
- W3: Belastung
- W4: Belastung

## Patentansprüche

1. Computerimplementiertes Verfahren zum Erstellen eines Lastverteilungsplans zur Befestigung wenigstens eines Solarpanels (16) und/oder eines Photovoltaikmoduls auf einem realen Dach, bei dem
ein Modell mit einem Dach, vorzugsweise Dachsparren (10), Halteschienen (12) und Dachhaken (14) erstellt wird, und
wenigstens ein Dachhaken (14) manuell verschoben wird, um zur Materialeinsparung eine gewünschte Belastung (W1') einzustellen, wobei
die Belastung (W1, W1') des Dachhakens (14) und/oder der Halteschiene (12) in Abhängigkeit von der Position des Dachhakens (14) in Echtzeit berechnet und/oder angezeigt wird.

2. Verfahren nach Anspruch 1,
**dadurch gekennzeichnet,**
**dass** die Belastung (W1, W1', W2, W3, W4) in Prozenten angezeigt wird.

3. Verfahren nach Anspruch 1 oder 2,
**dadurch gekennzeichnet,**
**dass** die Belastung abhängig vom Grad der Belastung in unterschiedlichen Farben angezeigt wird.

4. Verfahren nach einem der vorhergehenden Ansprüche,
**dadurch gekennzeichnet,**
**dass** die Belastungen (W1, W1', W2, W3, W4) sämtlicher Dachhaken (14) und/oder der Halteschienen (12) angezeigt werden.

5. Verfahren nach einem der vorhergehenden Ansprüche,
**dadurch gekennzeichnet,**
**dass** mehrere Dachhaken (14) gemeinsam verschoben werden.

6. Verfahren nach einem der vorhergehenden Ansprüche,
**dadurch gekennzeichnet,**
**dass** das Verschieben mittels Drag-and-drop erfolgt.

7. System zur Datenverarbeitung, umfassend Mittel zur Ausführung des Verfahrens nach einem der vorhergehenden Ansprüche.

8. Computerprogrammprodukt, umfassend Befehle, die bei der Ausführung des Programms durch einen Computer diesen veranlassen, das Verfahren nach einem der Ansprüche 1 bis 6 auszuführen.

9. Computerlesbares Speichermedium, umfassend Befehle, die bei der Ausführung durch einen Computer diesen veranlassen, das Verfahren nach einem der Ansprüche 1 bis 6 auszuführen.
